# EUROPÄISCHE PATENTSCHRIFT

(11) **EP 2 746 037 B1**
(45) Veröffentlichungstag und Bekanntmachung des Hinweises auf die Patenterteilung: **14.09.2016**
(21) Anmeldenummer: 13185508.2
(22) Anmeldetag: 23.09.2013
(51) Int. Cl.: B29D 30/72, B29D 30/20, B29D 30/24, B29D 30/32

(54) **VERFAHREN ZUR HERSTELLUNG EINES FAHRZEUGREIFENS**
METHOD FOR PRODUCING A TYRE FOR A VEHICLE
PROCÉDÉ DE FABRICATION D'UN PNEU DE VÉHICULE

(30) Priorität: 18.12.2012 DE 102012112495
(43) Veröffentlichungstag der Anmeldung: 25.06.2014
(73) Patentinhaber: Continental Reifen Deutschland GmbH, 30165 Hannover (DE)
(72) Erfinder: Radziej, Guido, 38228 Salzgitter (DE); Schulze, Norbert, 26427 Holtgast (DE)
(74) Vertreter: Finger, Karsten

(56) Entgegenhaltungen:
- EP-A1- 0 351 222
- EP-A1- 1 216 814
- EP-A1- 2 380 728
- EP-A2- 0 676 277
- WO-A1-03/095185
- WO-A1-2011/145926
- DE-A1- 2 705 504
- DE-A1-102006 053 553
- US-A- 4 011 127
- US-A- 4 685 992

## Beschreibung

Die Erfindung betrifft ein Verfahren zur Herstellung eines Fahrzeugreifens.

Bei konventionellen Fahrzeugreifen ist bekannt, die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen.

Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut. Eine solche Karkasstrommel ist in der Regel relativ komplex aufgebaut.

Bei den herkömmlichen Reifenaufbauverfahren werden auf der Karkasstrommel auch beide Seitenwände aufgewickelt. Anschließend wird die Reifenkarkasse mit den bereits applizierten Seitenwänden zu der Bombiertrommel verfahren, an der unter anderem die Reifenkarkasse mit dem Reifengürtel-Laufstreifen-Paket vereinigt wird. Die Bereiche der Seitenwände, die mit dem Gürtel-Laufstreifen-Paket überlappen, sind hierbei unter dem Gürtel-Laufstreifen-Paket angeordnet. Ein Nachteil bei diesem herkömmlichen Verfahren besteht darin, dass bestimmte Reifenkonstruktionen nicht realisierbar sind.

Ein Verfahren zur Herstellung eines Fahrzeugreifens mittels Aufbautrommeln ist in der EP 0 351 222 A1 offenbart.

Eine Vorrichtung zum Herstellen eines Fahrzeugreifens umfassend eine Aufbautrommel, einen Wulsthalter sowie eine Wulstfördereinrichtung ist aus der US 4 685 992 A bekannt. Der Wulsthalter umfasst dabei radial expandierbare Segmente zum Halten der Wulstkerne. Die Segmente werden zusammengezogen, um die Wulstkerne freizugeben, so dass diese von der Wulstfördereinrichtung zur Aufbautrommel, auf welcher die Karkasse angeordnet ist, befördert werden können.

Die DE 10 2006 053 553 A1 offenbart eine Kernklemmvorrichtung zur Verwendung beim Aufbau einer Rohreifenkarkasse, welche zumindest eine Karkasseinlage, Wulstkerne und Seitenwände aufweist. Die Kernklemmvorrichtung klemmt die den Wulstbereich der Rohreifenkarkasse während des Bombierens, dem Bilden des Karkasshochschlages und dem Andrücken der Seitenwand. Die Klemmvorrichtung umfasst dabei in radialer Richtung bewegliche Stützelemente, welche den geklemmten Wulstbereich radial innerhalb des Kernes abstützen.

Der Erfindung liegt die Aufgabe zugrunde, ein Verfahren bereitzustellen, mit dem bestimmte Reifenkonstruktionen auf einfache Weise hergestellt werden können.

Gelöst wird die Aufgabe gemäß Anspruch 1 dadurch, dass ein Verfahren mit folgenden Schritten eingesetzt wird:
a) Fertigstellen einer Reifenkarkasse auf einer Karkasstrommel,
   wobei auf der Karkasstrommel keine Reifenaufbauteile in Form von Seitenwänden aufgelegt werden,
b) Abnahme der Reifenkarkasse von der Karkasstrommel mit einer Karkasstransfereinheit,
c) Anordnen von Seitenwänden auf einer Seitenwandtrommel,
d) Positionieren der Reifenkarkasse über den auf der Seitenwandtrommel angeordneten Seitenwänden,
   wobei die Karkasstransfereinheit mit der Reifenkarkasse und die Seitenwandtrommel koaxial angeordnet werden,
e) Verbinden der Seitenwände mit der Reifenkarkasse,
   wobei die Seitenwände mit der Reifenkarkasse nur in den Bereichen der Reifenwulste verbunden werden,
   wobei die Seitenwände in Bezug auf die Reifenwulste der Reifenkarkasse jeweils ein an der Innenseite überstehendes inneres Seitenwand-Bauteil und ein an der Außenseite überstehendes äußeres Seitenwand-Bauteil aufweisen,
f) Positionieren der Karkasstransfereinheit mit der Reifenkarkasse und den Seitenwänden an einer Aufbautrommel,
   wobei die Aufbautrommel in radialer Richtung expandierbare Segmentträger umfasst, auf welchen radial außenseitig nachgiebige Segmentauflagen positioniert sind,
   wobei die Reifenwulste der Reifenkarkasse radial außenseitig in Bezug auf die nachgiebigen Segmentauflagen positioniert werden,
g) Hochschlagen der inneren Seitenwand-Bauteile sowie der an die Reifenwulste angrenzenden Bereiche der äußeren Seitenwand-Bauteile,
   wobei die Segmentträger der Aufbautrommel expandieren,
   wobei die Reifenwulste und die Seitenwände zumindest so weit in die nachgiebigen Segmentauflagen eingedrückt werden, dass die inneren Seitenwand-Bauteile vollständig in die nachgiebigen Segmentauflagen eingedrückt werden,
   wobei die inneren Seitenwand-Bauteile mit der Innenseite der Reifenkarkasse verbunden werden und die eingedrückten Bereiche der äußeren Seitenwand-Bauteile mit der Außenseite der Reifenkarkasse verbunden werden,
h) Zusammenfahren der Segmentträger der Aufbautrommel,
i) Verfahren der Karkasstransfereinheit mit der Reifenkarkasse und den Seitenwänden zu einer Bombiertrommel,
j) Übergabe der Reifenkarkasse von der Karkasstransfereinheit an die Bombiertrommel und Wegfahren der Karkasstransfereinheit von der Bombiertrommel,
k) Bombieren der Reifenkarkasse mit den auf beiden Seiten angebundenen Seitenwänden,
   wobei die Seitenwände mit einem Hochschlagmittel seitlich an der Reifenkarkasse hochgeschlagen werden und die Reifenkarkasse mit dem koaxial angeordneten Reifengürtel-Laufstreifen-Paket vereinigt wird,
l) Fertigstellen des Reifenrohlings mit weiteren Schlitten.

Ein Vorteil der Erfindung ist insbesondere darin zu sehen, dass durch das Verfahren auf einfache Weise ein Fahrzeugreifen mit einer speziellen Konstruktion hergestellt werden kann.

Das Verfahren ermöglicht die Herstellung von speziellen Reifenkonstruktionen, die mit den herkömmlichen Reifenaufbauverfahren bisher nicht möglich waren. Bedeutend ist dabei u.a., dass die Seitenwände nicht auf der Karkasstrommel appliziert werden, sondern erst in einem der nachfolgenden Verfahrensschritte. Zu den hierdurch realisierbaren speziellen Reifenkonstruktionen zählen insbesondere Reifenkonstruktionen, bei denen die Endbereiche der äußeren Seitenwand-Bauteile über dem Reifengürtel-Laufstreifen-Paket angeordnet werden. Diese Art der Reifenkonstruktion wird durch die erfindungsgemäßen Verfahrensschritte nach Patentanspruch 1 ermöglicht.

Das Eindrücken der Reifenwulste sowie der inneren Seitenwand-Bauteile in die nachgiebigen Segmentauflagen in Schritt g) bewirkt eine feste Verbindung zwischen dem inneren Seitenwand-Bauteil und der inneren Seite der Reifenkarkasse.

Die Reifenwulste werden mit den Seitenwänden so weit in die nachgiebigen Segmentauflagen gedrückt, dass die inneren Seitenwand-Bauteile vollständig in die nachgiebigen Segmentauflagen eingedrückt sind. Die nachgiebigen Segmentauflagen drücken somit die eingedrückten inneren und äußeren Seitenwand-Bauteile gegen die Reifenkarkasse.

Dadurch werden zum einen die inneren Seitenwand-Bauteile fest mit den inneren Seiten der Reifenwulste verbunden, zum anderen werden die eingedrückten Bereiche der äußeren Seitenwand-Bauteile fest mit den äußeren Seiten der Reifenwulste verbunden.

Ein weiterer Vorteil besteht darin, dass die Komplexität des Herstellungsverfahrens des Fahrzeugreifens bzw. des Reifenrohlings insgesamt reduziert werden kann, da an der Bombiertrommel der komplexe Verfahrensschritt des Hochschlagens der inneren Seitenwand-Bauteile entfällt.

Ein weiterer Vorteil besteht darin, dass die Komplexität der Bauteile an der Bombiertrommel reduziert wird, da durch das Wegfallen des Hochschlagens der inneren Seitenwand-Bauteile an der Bombiertrommel dort keine Hochschlagmittel für die inneren Seitenwand-Bauteile angebracht sein müssen.

In einer vorteilhaften Weiterbildung der Erfindung ist vorgesehen, dass bei Schritt g) die nachgiebigen Segmentauflagen die eingedrückten Bereiche der inneren und äußeren Seitenwand-Bauteile gegen die Reifenkarkasse drücken.

Hierdurch ist eine feste Verbindung der inneren Seitenwand-Bauteile mit der Karkasse sowie der eingedrückten Bereiche der äußeren Seitenwand-Bauteile mit der Karkasse geschaffen.

In einer vorteilhaften Weiterbildung der Erfindung ist vorgesehen, dass die nachgiebigen Segmentauflagen in Form von Schaumstoff und / oder Moosgummi und / oder jeweils in Form eines mit Luft beaufschlagbaren Schlauches ausgebildet sind.

Eine nachgiebige Segmentauflage kann beispielsweise durch einen in eine Nut des expandierbaren Segmentträgers eingelegten mit Luft beaufschlagten Schlauch ausgebildet sein, wobei durch den Luftdruck die Anpresskraft variiert werden kann oder wobei die Anpresskraft mit Unterdruck erzeugt werden kann.

Dadurch sind nachgiebige Segmentauflagen geschaffen, die die eingedrückten Reifenbauteile umschließen und die eingedrückten Reifenbauteile gegenseitig aneinanderdrücken.

In einer weiteren vorteilhaften Weiterbildung der Erfindung ist vorgesehen, dass bei Schutt g) die Reifenwulste sowie die Seitenwände zumindest so weit in die nachgiebigen Segmentauflagen eingedrückt werden, dass die hierdurch mit den Reifenwulsten verbundenen Bereiche der Seitenwände optimal bei Schutt k) für die Kernklemmsegmente der Bombiertrommel vorgeformt sind.

Dadurch kann eine Beschädigung der Seitenwände, insbesondere der äußeren Seitenwände, durch die Kernklemmsegmente der Bombiertrommel, welche zum Halten der Karkasse die von den Seitenwänden umschlagenen Reifenwulste klemmt, vermieden werden.

In einer weiteren vorteilhaften Weiterbildung der Erfindung ist vorgesehen, dass bei Schritt g) die Expansion der Segmentträger pneumatisch oder servo-motorisch erfolgt.

Dadurch können die Segmentträger mit hoher Geschwindigkeit expandieren.

In einer weiteren vorteilhaften Weiterbildung der Erfindung ist vorgesehen, dass bei Schritt g) die Position der Reifenkarkasse durch die Karkasstransfereinheit fixiert ist.

Dadurch ist ein positionsgenaues Eindrücken von Reifenwulsten und Bereichen der Seitenwände in die nachgiebigen Segmentauflagen möglich.

In einer weiteren vorteilhaften Weiterbildung der Erfindung ist vorgesehen, dass eine Fixierung der Reifenwulste an der Karkasstransfereinheit mittels magnetischem Effekt erfolgt.

Die Kerne von Reifenwulsten enthalten üblicherweise ferromagnetisches Material. Die Haltemittel können beispielsweise schaltbare Magnetspulen enthalten, wodurch eine Aufhebung der Fixierung beispielsweise durch Ausschalten oder Umpolen der Magnetspulen oder durch bloßen Druck gegen die Haltemittel in radialer Richtung nach außen erfolgt. Dadurch kann eine schnelle und sichere Fixierung sowie Aufhebung der Fixierung erwirkt werden.

In einer weiteren vorteilhaften Weiterbildung der Erfindung ist vorgesehen, dass die Aufbautrommel aus zwei Hälften besteht, wobei zumindest die expandierbaren Segmentträger mit den darauf befindlichen nachgiebigen Segmentauflagen axial zueinander positioniert werden können.

Dadurch kann die Aufbautrommel ohne aufwändige konstruktive Änderungen oder zeitlichen Verlust an verschiedene Reifendimensionen, d.h. beispielsweise verschiedene Abstände zwischen den Reifenwulsten, angepasst werden.

Die Positionierung kann über einen motorischen Antrieb und mit einem Schlitten erfolgen.

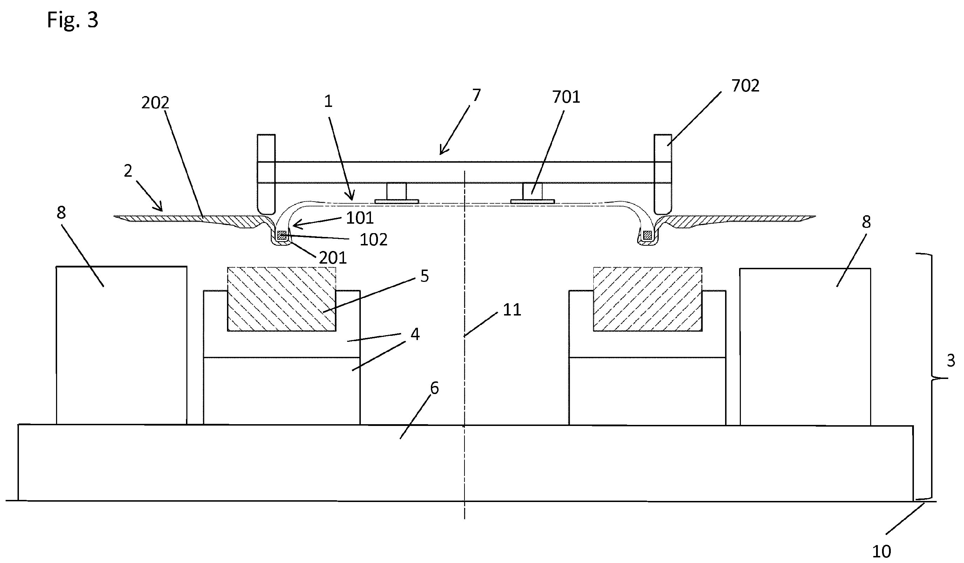

In einer weiteren vorteilhaften Weiterbildung der Erfindung ist vorgesehen, dass die Seitenwandtrommel aus zwei Teil-Seitenwandtrommeln gebildet ist, auf welche jeweils eine Seitenwand aufgebracht ist, wobei die expandierbaren Segmentträger der Aufbautrommel axial zwischen den zwei Teil-Seitenwandtrommeln angeordnet sind, wobei zum Positionieren von Seitenwänden und Reifenkarkasse in Schritt d) die Segmentträger sowie die Teil-Seitenwandtrommeln axial nach innen gefahren werden. Die Seitenwandtrommel sowie die Aufbautrommel können hierbei über eine Welle in Verbindung stehen, wobei die Seitenwandtrommel Teil der Aufbautrommel ist. Vorteilhaft ist, dass die Zykluszeit zur Anordnung der Seitenwände an der Reifenkarkasse reduziert werden und auf eine separate Seitenwandtrommel verzichtet werden kann. Ein Ausführungsbeispiel ist in Fig. 3 gezeigt.

In einer weiteren vorteilhaften Weiterbildung der Erfindung ist vorgesehen, dass bei Schritt k) die Seitenwände nach dem Transfer des Reifengürtel-Laufstreifen-Paketes über die Bombiertrommel hochgeschlagen werden, wobei ein Teil der Seitenwände über dem Laufstreifen angeordnet werden kann.

Dadurch ist eine bestimmte Reifenkonstruktion realisierbar, bei der der obere Teil der Seitenwände über dem Reifengürtel-Laufstreifen-Paket angeordnet werden kann.

In einer weiteren vorteilhaften Weiterbildung der Erfindung ist vorgesehen, dass bei Schritt k) die Seitenwände vor dem Transfer des Reifengürtel-Laufstreifen-Paketes über die Bombiertrommel hochgeschlagen werden, wobei ein Teil der Seitenwände unter dem Laufstreifen angeordnet werden kann.

Dadurch ist eine bestimmte Reifenkonstruktion realisierbar, bei der der obere Teil der Seitenwände unter dem Reifengürtel-Laufstreifen-Paket angeordnet werden kann.

In einer weiteren vorteilhaften Weiterbildung der Erfindung ist vorgesehen, dass die Hochschlagmittel in Form mindestens eines, insbesondere einer Vielzahl von Rollenhebeln ausgebildet sind. Auf diese Weise werden die Seitenwände mit einer hohen Präzision und Schnelligkeit an der Reifenkarkasse hochgeschlagen. Das Hochschlagen der beiden Seitenwände kann weitgehend gleichzeitig oder nacheinander erfolgen.

In einer weiteren vorteilhaften Weiterbildung der Erfindung ist vorgesehen, dass die Reifenkarkasse auf der Karkasstrommel mit einem Wulstkern und einem Lagenumschlag vorkonfektioniert wird. Auf diese Weise wird die Zykluszeit insgesamt reduziert. Die Reifenkarkasse kann auf der Karkasstrommel auch in Form eines flachen Schlauches ohne einen Lagenumschlag vorkonfektioniert werden. Bei dieser Variante erfolgt auf der Karkasstrommel kein Lagenumschlag. Die Reifenkarkasse wird in Form eines flachen Schlauches zu der Aufbautrommel transferiert. Der Lagenumschlag der Karkasseinlage erfolgt bei dieser Variante zusammen mit dem Hochschlagen der Seitenwände.

In einer weiteren vorteilhaften Weiterbildung der Erfindung ist vorgesehen, dass die Seitenwände auf der Seitenwandtrommel vorkonfektioniert werden. Auf der Seitenwandtrommel können außer den Seitenwänden auch weitere Reifenaufbauteile appliziert werden. Als weitere Reifenaufbauteile kommen z.B. Wulstverstärker in Form von gummierten Textil- oder Stahlkordlagen in Frage. Das Auflegen dieser weiteren Reifenaufbauteile auf der Seitenwandtrommel reduziert insgesamt die Zykluszeit. In einer weiteren vorteilhaften Weiterbildung der Erfindung ist vorgesehen, dass die Verbindung der auf der Seitenwandtrommel angeordneten Seitenwände mit der Reifenkarkasse im Bereich der Reifenwulste über eine Dehnung in radialer Richtung erfolgt. Auf diese Weise erfolgt eine präzise Übergabe der Seitenwände an die Reifenkarkasse.

Bei den mittels des beschriebenen Verfahrens hergestellten Fahrzeugreifen handelt es sich insbesondere um Fahrzeugluftreifen, insbesondere für Personenkraftwagen, Lastkraftwagen oder Nutzfahrzeuge.

Weitere Merkmale, Vorteile und Einzelheiten der Erfindung werden nun anhand mehrerer Ausführungsbeispiele näher beschrieben. Dabei zeigt die:
Fig. 1 : eine Radial-Schnitt-Ansicht durch die Aufbautrommel mit eingefallenen Segmentträgern vor Schritt g)
Fig. 2: eine Radial-Schnitt-Ansicht durch die Aufbautrommel mit expandierten Segmentträgern nach Schritt g)
Fig. 3: eine Radial-Schnitt-Ansicht durch die Aufbautrommel mit eingefallenen Segmentträgern nach Schritt h)

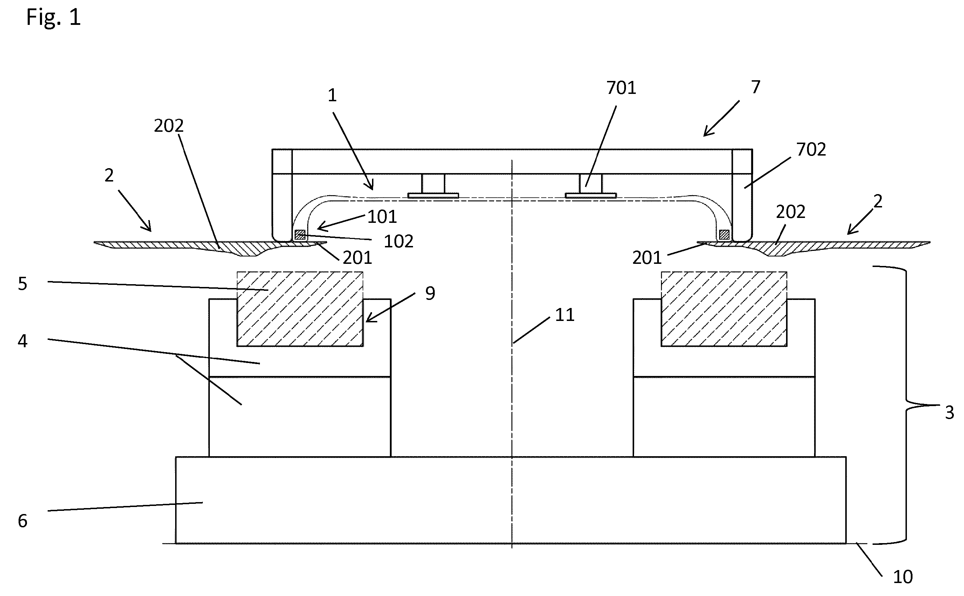

Die Figur 1 zeigt eine schematische Radial-Schnitt-Ansicht durch die Aufbautrommel 3, wobei jeweils nur die oberen Hälften dargestellt sind. Die Linie 10 stellt die axiale Symmetrielinie dar, zu der der Aufbau im Wesentlichen rotationssymmetrisch ist, und gibt die axiale Richtung an. Die Linie 11 definiert die radiale Richtung. Der Aufbau ist im Wesentlichen Symmetrisch zu einer Spiegelebene, welche zur axialen Symmetrielinie 10 senkrecht ist und durch die Linie 11 geht.

In der Fig. 1 ist einer der ersten Verfahrensschritte dargestellt, bei dem die Reifenkarkasse 1 bereits koaxial über der Aufbautrommel 3 angeordnet ist und die Segmentträger 4 der Aufbautrommel 3 noch nicht expandiert sind. Die Aufbautrommel 3 umfasst außerdem eine Welle 6 für den Antrieb der Aufbautrommel 3, zwei in radialer Richtung 11 expandierbare Segmentträger 4, auf welchen radial außenseitig in Nuten 9 nachgiebige Segmentauflagen 5 positioniert sind. Die Aufbautrommel besteht aus zwei Hälften, welche im Wesentlichen rechts und links der Spiegelebene angeordnet sind.

Die Reifenkarkasse 1 beinhaltet eine oder mehrere Karkasslagen sowie zwei Reifenwulste 101, jeweils mit Lagenumschlag von Karkasslagen um den Wulstkern 102. Die Reifenkarkasse 1 wird von der Karkasstransfereinheit 7 mittels der Haltemittel 701 und 702 gehalten. Die Fixierung der Reifenwulste 101 an der Karkasstransfereinheit erfolgt über magnetische Anziehung zwischen den ferromagnetisches Material enthaltenden Wulstkernen 102 und Magnete enthaltende Haltemitteln 702. In Fig. 1 ist die Karkasstransfereinheit 7 koaxial über die Aufbautrommel 3 gefahren, wobei die Reifenwulste 101 der Radialkarkasse 1 radial außenseitig in Bezug auf die nachgiebigen Segmentauflagen 5 positioniert sind. Die Reifenkarkasse ist bei diesem Verfahrensschritt nur in den Bereichen der Reifenwulste 101 mit jeweils einer von zwei Seitenwänden 2 verbunden, wobei die Seitenwände 2 in Bezug auf die Reifenwulste 101 jeweils ein an der Innenseite überstehendes inneres Seitenwand-Bauteil 201 und ein an der Außenseite überstehendes äußeres Seitenwand-Bauteil 202 aufweisen.

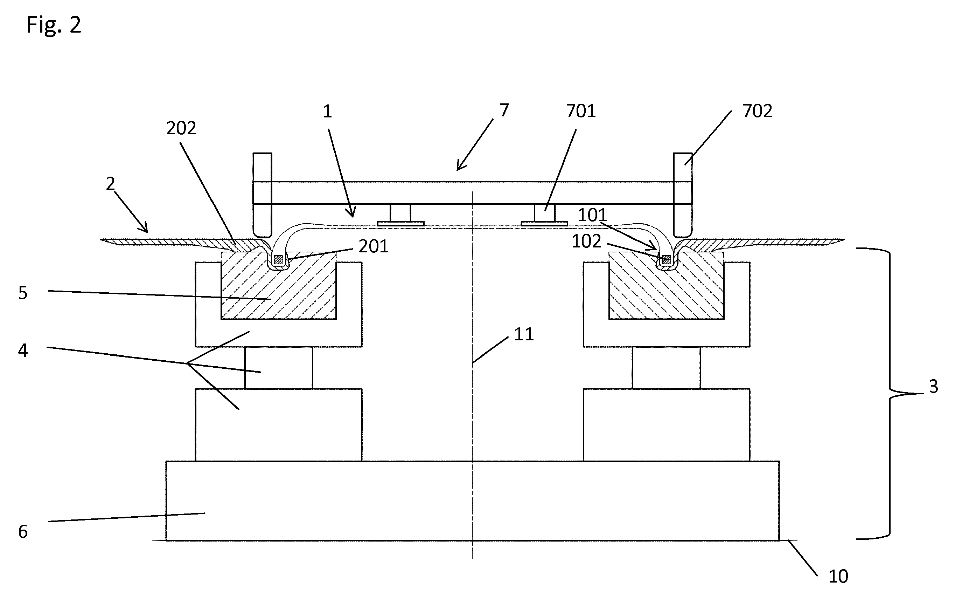

Die Fig. 2 zeigt den Aufbau nach einem weiteren Verfahrensschritt, bei dem die expandierbaren Segmentträger 4 in radialer Richtung 11 expandiert dargestellt sind. Die Expansion erfolgt pneumatisch. Die Expansion erfolgt dergestalt, dass die Reifenwulste 101 und die Seitenwände 2 so weit in die nachgiebigen Segmentauflagen 5 eingedrückt sind, dass die inneren Seitenwand-Bauteile 201 vollständig in die nachgiebigen Segmentauflagen 5 eingedrückt sind. Die nachgiebigen Segmentauflagen 5 bestehen aus Moosgummi. Sie umschließen die eingedrückten Reifenbauteile und üben auf diese in axialer Richtung 10 von beiden Seiten Druck aus. Hierdurch werden die inneren Seitenwand-Bauteile 201 gegen die Innenseite der Reifenkarkasse 1 gedrückt und hierdurch mit dieser verbunden. Die eingedrückten Bereiche der äußeren Seitenwand-Bauteile 202 werden gegen die Außenseite der Reifenkarkasse 1 gedrückt und hierdurch mit dieser verbunden. Die Reifenkarkasse 1 selbst wird in Fig. 2 weiterhin von der Karkasstransfereinheit 7 mittels der Haltemittel 701 gehalten und hat ihre Position nicht wesentlich verändert.

Die nicht eingedrückten Bereiche der äußeren Seitenwände 202 sind in Fig. 2 durch die radial nach außen expandierten Segmentträger 4 und / oder die radial nach außen bewegten nachgiebigen Segmentauflagen 5 radial nach außen gedrückt. Um dies zu ermöglichen, sind auch die Haltemittel 702 für die Reifenwulste 101 in radialer Richtung 11 nach außen bewegt. Die Haltemittel 702 sind beweglich an der Karkasstransfereinheit 7 angebracht. Die Aufhebung der Fixierung der Reifenwulste 101 an den Haltemittlen 702 erfolgt durch Ausschalten der Magnespulen der Haltemittel 702.

In Fig. 3 ist der Aufbau nach einem weiteren Verfahrensschritt dargestellt. Die expandierbaren Segmentträger 4 der Aufbautrommel 3 sind zusammengefahren und die vormals eingedrückten Bereiche von Reifenkarkasse 1 und Seitenwänden 2 sind freigegeben. Die nachgiebigen Segmentauflagen 4 aus Moosgummi sind weitgehend in ihren Ausgangszustand zurückversetzt, d.h. sie haben nach Entfernen der eingedrückten Reifenbauteile ihre ursprüngliche Form weitgehend wieder angenommen. Die an die Reifenwulste 101 angerenzenden Bereiche der äußeren Seitenwand-Bauteile 202 lassen genug Platz für die Kernklemmsegmente der Bombiertrommel, welche in einem weiteren Verfahrensschritt zum Halten der Karkasse 1 die von den Seitenwänden 2 umschlagenen Reifenwulste 101 klemmen.

Fig. 3 zeigt ein Ausführungsbeispiel, bei welchem die Seitenwandtrommel aus zwei Teil-Seitenwandtrommeln 8 gebildet ist. Diese stehen mit der Aufbautrommel über die Welle in Verbindung, wobei die Seitenwandtrommel Teil der Aufbautrommel ist. Die expandierbaren Segmentträger 4 sind axial zwischen den zwei Teil-Seitenwandtrommeln 8 angeordnet. Die Verbindung der Reifenwulste 101 mit den Seitenwänden 2 vor Expansion der nachgiebigen Segmentauflagen 5 ist somit an der Aufbautrommel erfolgt.

### Bezugszeichenliste (ist Teil der Beschreibung)

- 1: Reifenkarkasse
- 2: Seitenwand
- 3: Aufbautrommel
- 4: expandierbare Segmentträger
- 5: nachgiebige Segmentauflage
- 6: Welle für den Antrieb der Aufbautrommel
- 7: Karkasstransfereinheit
- 8: Teil-Seitenwandtrommel
- 9: Nut
- 10: axiale Richtung, bzw. Symmetrielinie
- 11: radiale Richtung, bzw. Symmetrielinie
- 101: Reifenwulst mit Lagenumschlag und Kern
- 102: Wulstkern
- 201: inneres Seitenwand-Bauteil
- 202: äußeres Seitenwand-Bauteil
- 701: Haltemittel für Reifenkarkasse
- 702: Haltemittel für Reifenwulst der Reifenkarkasse

## Patentansprüche

1. Verfahren zur Herstellung eines Fahrzeugreifens mit einer Reifenkarkasse (1), Reifenwulsten (101) mit Wulstkernen (102), Seitenwänden (2), einem Reifengürtel und einem Laufstreifen mit folgenden Schritten:
a) Fertigstellen einer Reifenkarkasse (1) auf einer Karkasstrommel,
wobei auf der Karkasstrommel keine Reifenaufbauteile in Form von Seitenwänden (2) aufgelegt werden,
b) Abnahme der Reifenkarkasse (1) von der Karkasstrommel mit einer Karkasstransfereinheit (7),
c) Anordnen von Seitenwänden (2) auf einer Seitenwandtrommel,
d) Positionieren der Reifenkarkasse (1) über den auf der Seitenwandtrommel angeordneten Seitenwänden (2),
wobei die Karkasstransfereinheit (7) mit der Reifenkarkasse (1) und die Seitenwandtrommel koaxial angeordnet werden,
e) Verbinden der Seitenwände (2) mit der Reifenkarkasse (1),
wobei die Seitenwände (2) mit der Reifenkarkasse (1) nur in den Bereichen der Reifenwulste (101) verbunden werden,
wobei die Seitenwände (2) in Bezug auf die Reifenwulste (101) der Reifenkarkasse (1) jeweils ein an der Innenseite überstehendes inneres Seitenwand-Bauteil (201) und ein an der Außenseite überstehendes äußeres Seitenwand-Bauteil (202) aufweisen,
f) Positionieren der Karkasstransfereinheit (7) mit der Reifenkarkasse (1) und den Seitenwänden (2) an einer Aufbautrommel (3),
wobei die Aufbautrommel (3) in radialer Richtung (11) expandierbare Segmentträger (4) umfasst, auf welchen radial außenseitig nachgiebige Segmentauflagen (5) positioniert sind,
wobei die Reifenwulste der Reifenkarkasse (1) radial außenseitig in Bezug auf die nachgiebigen Segmentauflagen (5) positioniert werden,
g) Hochschlagen der inneren Seitenwand-Bauteile (201) sowie der an die Reifenwulste angrenzenden Bereiche der äußeren Seitenwand-Bauteile (202),
wobei die Segmentträger (4) der Aufbautrommel (3) expandieren,
wobei die Reifenwulste und die Seitenwände (2) zumindest so weit in die nachgiebigen Segmentauflagen (5) eingedrückt werden, dass die inneren Seitenwand-Bauteile (201) vollständig in die nachgiebigen Segmentauflagen (5) eingedrückt werden,
wobei die inneren Seitenwand-Bauteile (201) mit der Innenseite der Reifenkarkasse (1) verbunden werden und die eingedrückten Bereiche der äußeren Seitenwand-Bauteile (202) mit der Außenseite der Reifenkarkasse (1) verbunden werden,
h) Zusammenfahren der Segmentträger (4) der Aufbautrommel,
i) Verfahren der Karkasstransfereinheit (7) mit der Reifenkarkasse (1) und den Seitenwänden (2) zu einer Bombiertrommel,
j) Übergabe der Reifenkarkasse (1) von der Karkasstransfereinheit (7) an die Bombiertrommel und Wegfahren der Karkasstransfereinheit (7) von der Bombiertrommel,
k) Bombieren der Reifenkarkasse (1) mit den auf beiden Seiten angebundenen Seitenwänden (2),
wobei die Seitenwände (2) mit einem Hochschlagmittel seitlich an der Reifenkarkasse (1) hochgeschlagen werden und die Reifenkarkasse (1) mit dem koaxial angeordneten Reifengürtel-Laufstreifen-Paket vereinigt wird,
l) Fertigstellen des Reifenrohlings mit weiteren Schritten.

2. Verfahren nach Anspruch 1,
**dadurch gekennzeichnet, dass**
bei Schritt g) die nachgiebigen Segmentauflagen (5) die eingedrückten Bereiche der inneren und äußeren Seitenwand-Bauteile (201, 202) gegen die Reifenkarkasse (1) drücken.

3. Verfahren nach zumindest einem der vorhergehenden Ansprüche,
**dadurch gekennzeichnet, dass**
die nachgiebigen Segmentauflagen (5) in Form von Schaumstoff und / oder Moosgummi und / oder jeweils in Form eines mit Luft beaufschlagbaren Schlauches ausgebildet sind.

4. Verfahren nach zumindest einem der vorhergehenden Ansprüche,
**dadurch gekennzeichnet, dass**
bei Schritt g) die Reifenwulste sowie die Seitenwände (2) zumindest so weit in die nachgiebigen Segmentauflagen (5) eingedrückt werden, dass die hierdurch mit den Reifenwulsten verbundenen Bereiche der Seitenwände (2) optimal bei Schritt k) für die Kernklemmsegmente der Bombiertrommel vorgeformt sind.

5. Verfahren nach zumindest einem der vorhergehenden Ansprüche,
**dadurch gekennzeichnet, dass**
bei Schritt g) die Expansion der Segmentträger (4) pneumatisch oder servo-motorisch erfolgt.

6. Verfahren nach zumindest einem der vorhergehenden Ansprüche,
**dadurch gekennzeichnet, dass**
bei Schritt g) die Position der Reifenkarkasse (1) durch die Karkasstransfereinheit (7) fixiert ist.

7. Verfahren nach zumindest einem der vorhergehenden Ansprüche,
**dadurch gekennzeichnet, dass**
eine Fixierung der Reifenwulste an der Karkasstransfereinheit (7) mittels magnetischem Effekt erfolgt.

8. Verfahren nach zumindest einem der vorhergehenden Ansprüche,
**dadurch gekennzeichnet, dass**
die Aufbautrommel (3) aus zwei Hälften besteht, wobei zumindest die expandierbaren Segmentträger (4) mit den darauf befindlichen nachgiebigen Segmentauflagen (5) axial zueinander positioniert werden können.

9. Verfahren nach zumindest einem der vorhergehenden Ansprüche,
**dadurch gekennzeichnet, dass**
die Seitenwandtrommel aus zwei Teil-Seitenwandtrommeln (8) gebildet ist, auf welche jeweils eine Seitenwand (2) aufgebracht ist,
wobei die expandierbaren Segmentträger (4) der Aufbautrommel (3) axial zwischen den zwei Teil-Seitenwandtrommeln (8) angeordnet sind,
wobei zum Positionieren von Seitenwänden (2) und Reifenkarkasse (1) in Schritt d) die Segmentträger (4) sowie die Teil-Seitenwandtrommeln (8) axial nach innen gefahren werden.

10. Verfahren nach zumindest einem der vorhergehenden Ansprüche,
**dadurch gekennzeichnet, dass**
bei Schritt k) die Seitenwände (2) nach dem Transfer des Reifengürtel-Laufstreifen-Paketes über die Bombiertrommel hochgeschlagen werden, wobei ein Teil der Seitenwände (2) über dem Laufstreifen angeordnet werden kann.

## Claims

1. Method for producing a vehicle tyre having a tyre carcass (1), tyre beads (101) with bead cores (102), sidewalls (2), a tyre belt and a tread strip having the following steps:
a) completing of a tyre carcass (1) on a carcass drum, no tyre construction parts in the form of sidewalls (2) being placed on the carcass drum,
b) removing of the tyre carcass (1) from the carcass drum by way of a carcass transfer unit (7),
c) arranging of sidewalls (2) on a sidewall drum,
d) positioning of the tyre carcass (1) over the sidewalls (2) which are arranged on the sidewall drum, the carcass transfer unit (7) with the tyre carcass (1) and the sidewall drum being arranged coaxially,
e) connecting of the sidewalls (2) to the tyre carcass (1),
the sidewalls (2) being connected to the tyre carcass (1) only in the regions of the tyre beads (101),
the sidewalls (2) having, in relation to the tyre beads (101) of the tyre carcass (1), in each case one inner sidewall component (201) which projects on the inner side and one outer sidewall component (202) which projects on the outer side,
f) positioning of the carcass transfer unit (7) with the tyre carcass (1) and the sidewalls (2) on a building drum (3),
the building drum (3) comprising segment carriers (4) that can expand in the radial direction (11) and on which resilient segment supports (5) are positioned radially on the outer side,
the tyre beads of the tyre carcass (1) being positioned radially on the outer side in relation to the resilient segment supports (5),
g) folding up of the inner sidewall components (201) and those regions of the outer sidewall components (202) which adjoin the tyre beads,
the segment carriers (4) of the building drum (3) expanding,
the tyre beads and the sidewalls (2) being pressed into the resilient segment supports (5) at least to such an extent that the inner sidewall components (201) are pressed completely into the resilient segment supports (5),
the inner sidewall components (201) being connected to the inner side of the tyre carcass (1), and the pressed-in regions of the outer sidewall components (202) being connected to the outer side of the tyre carcass (1),
h) moving together of the segment carriers (4) of the building drum,
i) moving of the carcass transfer unit (7) with the tyre carcass (1) and the sidewalls (2) to a shaping drum,
j) transferring of the tyre carcass (1) from the carcass transfer unit (7) to the shaping drum and moving away of the carcass transfer unit (7) from the shaping drum,
k) shaping of the tyre carcass (1) with the sidewalls (2) which are attached on both sides,
the sidewalls (2) being folded up laterally on the tyre carcass (1) by way of a folding-up means, and the tyre carcass (1) being combined with the coaxially arranged tyre belt/tread strip assembly,
l) finishing of the green tyre by way of further steps.

2. Method according to Claim 1, **characterized in that**, in step g), the resilient segment supports (5) press the pressed-in regions of the inner and outer sidewall components (201, 202) against the tyre carcass (1).

3. Method according to at least one of the preceding claims, **characterized in that** the resilient segment supports (5) are configured in the form of foam and/or sponge rubber and/or in each case in the form of a hose which can be loaded with air.

4. Method according to at least one of the preceding claims, **characterized in that**, in step g), the tyre beads and the sidewalls (2) are pressed into the resilient segment supports (5) at least to such an extent that the regions of the sidewalls (2) which are connected as a result to the tyre beads are pre-shaped in an optimum manner in step k) for the core clamping segments of the shaping drum.

5. Method according to at least one of the preceding claims, **characterized in that**, in step g), the expansion of the segment carriers (4) takes place pneumatically or by way of servomotor.

6. Method according to at least one of the preceding claims, **characterized in that**, in step g), the position of the tyre carcass (1) is fixed by way of the carcass transfer unit (7).

7. Method according to at least one of the preceding claims, **characterized in that** fixing of the tyre beads on the carcass transfer unit (7) takes place by means of a magnetic effect.

8. Method according to at least one of the preceding claims, **characterized in that** the building drum (3) consists of two halves, it being possible for at least the expandable segment carriers (4) with the resilient segment supports (5) which are situated thereon to be positioned axially with respect to one another.

9. Method according to at least one of the preceding claims, **characterized in that** the sidewall drum is formed from two part sidewall drums (8), onto which in each case one sidewall (2) is applied, the expandable segment carriers (4) of the building drum (3) being arranged axially between the two part sidewall drums (8), the segment carriers (4) and the part sidewall drums (8) being moved axially inwards in step d) in order to position the sidewalls (2) and the tyre carcass (1).

10. Method according to at least one of the preceding claims, **characterized in that**, in step k), the sidewalls (2) are folded up after the transfer of the tyre belt/tread strip assembly via the shaping drum, it being possible for a part of the sidewalls (2) to be arranged above the tread strip.

## Revendications

1. Procédé de fabrication d'un pneu de véhicule comprenant une carcasse de pneu (1), des talons de pneu (101) avec des tringles (102), des parois latérales (2), une ceinture de pneu et une bande de roulement, comprenant les étapes suivantes :
a) fabrication d'une carcasse de pneu (1) sur un tambour de carcasse, aucune pièce de montage du pneu en forme de parois latérales (2) n'étant posée sur le tambour de carcasse,
b) enlèvement de la carcasse de pneu (1) du tambour de carcasse avec une unité de transfert de carcasse (7),
c) disposition de parois latérales (2) sur un tambour de parois latérales,
d) positionnement de la carcasse de pneu (1) pardessus les parois latérales (2) disposées sur le tambour de parois latérales,
l'unité de transfert de carcasse (7) conjointement avec la carcasse de pneu (1) et le tambour de parois latérales, étant disposés coaxialement,
e) assemblage des parois latérales (2) à la carcasse de pneu (1),
les parois latérales (2) étant assemblées à la carcasse de pneu (1) uniquement dans les régions des talons de pneu (101),
les parois latérales (2) présentant, par rapport aux talons de pneu (101) de la carcasse de pneu (1), à chaque fois un composant de paroi latérale intérieur (201) faisant saillie au niveau du côté intérieur et un composant de paroi latérale extérieur (202) faisant saillie au niveau du côté extérieur,
f) positionnement de l'unité de transfert de carcasse (7) avec la carcasse de pneu (1) et les parois latérales (2) sur un tambour de montage (3),
le tambour de montage (3) comprenant des supports de segments (4) pouvant être écartés dans la direction radiale (11), sur lesquels sont positionnés des appuis de segments (5) flexibles radialement du côté extérieur,
les talons de pneu de la carcasse de pneu (1) étant positionnés radialement du côté extérieur par rapport aux appuis de segments flexibles (5),
g) relèvement des composants de paroi latérale intérieurs (201) ainsi que des régions adjacentes aux talons de pneu des composants de paroi latérale extérieurs (202),
les supports de segments (4) du tambour de montage (3) s'écartant,
les talons de pneu et les parois latérales (2) étant enfoncés dans les appuis de segments flexibles (5) dans une mesure telle que les composants de paroi latérale intérieurs (201) soient complètement enfoncés dans les appuis de segments flexibles (5),
les composants de paroi latérale intérieurs (201) étant assemblés au côté intérieur de la carcasse de pneu (1) et les régions enfoncées des composants de paroi latérale extérieurs (202) étant assemblées au côté extérieur de la carcasse de pneu (1),
h) rapprochement les uns des autres des supports de segments (4) du tambour de montage,
i) déplacement de l'unité de transfert de carcasse (7) avec la carcasse de pneu (1) et les parois latérales (2) pour former un tambour de bombage,
j) transfert de la carcasse de pneu (1) de l'unité de transfert de carcasse (7) au tambour de bombage et éloignement de l'unité de transfert de carcasse (7) du tambour de bombage,
k) bombage de la carcasse de pneu (1) avec les parois latérales (2) attachées des deux côtés, les parois latérales (2) étant relevées avec un moyen de relèvement latéralement au niveau de la carcasse de pneu (1) et la carcasse de pneu (1) étant assemblée au paquet disposé coaxialement constitué de la ceinture de pneu et de la bande de roulement,
l) finition de l'ébauche de pneu avec d'autres étapes.

2. Procédé selon la revendication 1,
**caractérisé en ce que**
à l'étape g), les appuis de segments flexibles (5) pressent les régions enfoncées des composants de parois latérales intérieurs et extérieurs (201, 202) contre la carcasse de pneu (1).

3. Procédé selon au moins l'une quelconque des revendications précédentes,
**caractérisé en ce que**
les appuis de segments flexibles (5) sont réalisés en forme de mousse et/ou de caoutchouc-mousse et/ou à chaque fois sous la forme d'un tuyau flexible pouvant être sollicité avec de l'air.

4. Procédé selon au moins l'une quelconque des revendications précédentes,
**caractérisé en ce que**
à l'étape g), les talons de pneu ainsi que les parois latérales (2) sont enfoncés dans les appuis de segments flexibles (5) au moins dans une mesure telle que les régions des parois latérales (2) assemblées de ce fait aux talons de pneu soient pré-formées de manière optimale à l'étape k) pour les segments de serrage de coeur du tambour de bombage.

5. Procédé selon au moins l'une quelconque des revendications précédentes,
**caractérisé en ce que**
à l'étape g), l'écartement des supports de segments (4) s'effectue de manière pneumatique ou par un servomoteur.

6. Procédé selon au moins l'une quelconque des revendications précédentes,
**caractérisé en ce que**
à l'étape g), la position de la carcasse de pneus (1) est fixée par l'unité de transfert de carcasse (7).

7. Procédé selon au moins l'une quelconque des revendications précédentes,
**caractérisé en ce que**
une fixation des talons de pneu à l'unité de transfert de carcasse (7) s'effectue au moyen d'un effet magnétique.

8. Procédé selon au moins l'une quelconque des revendications précédentes,
**caractérisé en ce que**
le tambour de montage (3) se compose de deux moitiés, au moins les supports de segments (4) pouvant être écartés pouvant être positionnés axialement les uns par rapport aux autres avec les appuis de segments flexibles (5) se trouvant sur ceux-ci.

9. Procédé selon au moins l'une quelconque des revendications précédentes,
**caractérisé en ce que**
le tambour de parois latérales est formé de deux tambours de parois latérales partiels (8), sur lesquels est à chaque fois montée une paroi latérale (2),
les supports de segments pouvant être écartés (4) du tambour de montage (3) étant disposés axialement entre les deux tambours de parois latérales partiels (8),
et pour le positionnement des parois latérales (2) et de la carcasse de pneu (1) à l'étape d), les supports de segments (4) ainsi que les tambours de parois latérales partiels (8) étant déplacés axialement vers l'intérieur.

10. Procédé selon au moins l'une quelconque des revendications précédentes,
**caractérisé en ce que**
à l'étape k), les parois latérales (2), après le transfert du paquet constitué de la ceinture de pneu et de la bande de roulement, sont relevées par le biais du tambour de bombage, une partie des parois latérales (2) pouvant être disposée au-dessus de la bande de roulement.
